# EUROPEAN PATENT SPECIFICATION

(11) **EP 0 879 323 B1**
(45) Date of publication and mention of the grant of the patent: **05.02.2003**
(21) Application number: 96932871.5
(22) Date of filing: 03.10.1996
(51) Int. Cl.: E03B 7/07, B01D 29/15, C02F 9/00, C02F 1/28

(54) **SANITARY WATER APPARATUS WITH FILTERING APPARATUS FOR FIBERS, IN PARTICULAR ASBESTOS FIBERS, AND A METHOD OF FILTERING MAINS WATER**
TRINKWASSERANLAGE MIT FILTEREINRICHTUNG FÜR FASERN, INSBESONDERE ASBESTFASERN, UND EIN VERFAHREN ZUM FILTERN VON LEITUNGSWASSER
APPAREIL SANITAIRE POUR L'EAU COMPORTANT UN APPAREIL DE FILTRAGE DES FIBRES ET NOTAMMENT DES FIBRES D'AMIANTE, ET UNE METHODE POUR FILTRER L'EAU DE DISTRIBUTION

(30) Priority: 03.10.1995 NL 1001331
(43) Date of publication of application: 25.11.1998
(73) Proprietor: Poels, Johannus Hermanus, 3224 CC Hellevoetsluis (NL); Koenders Beleggingsmaatschappij BV, 1316 BX Almere (NL)
(72) Inventor: KOENDERS, Olav, Hendrikus, NL-3755 AV Eemnes (NL)
(74) Representative: Smulders, Theodorus A.H.J., Ir.
(86) International application number: NL9600385
(87) International publication number: WO97013042

(56) References cited:
- EP-A- 0 316 687
- EP-A- 0 563 011
- WO-A-91/10493
- BE-A- 893 735
- DE-A- 2 356 210
- DE-U- 8 811 041
- DE-U- 9 310 946
- US-A- 4 181 607
- US-A- 4 714 546
- US-A- 4 904 382
- US-A- 5 078 876
- US-A- 5 149 437

## Description

The invention relates to a filtering apparatus for filtering particles from flowing water, according to the preamble of claim 1. Such an apparatus is known from DE-U-93 10 946.

The known apparatus is used, e.g., for drawing off drinking water and water for cooking and washing activities in private houses, works and institutions.

This known apparatus comprises a filtering apparatus installed in a water pipe, provided with a housing and a filter included therein. The filter has a cylindrical filtering wall, provided with passage openings and designed to filter contaminations from the water which, during use, flows through the filtering wall. By means of this apparatus relatively large contaminating parts can be filtered from the water. Around the filter a cilinder of active coal is provided to absorb left bacteria and other organic material on or near the filter in order to prevent the water to obtain an unpleasant taste and/or smell, in particular in case of a relatively long service life of the filter. The use of a depth filter has the advantage that it is of simple construction, gives relatively low pressure loss, can be easily exchanged and has a relatively large filtering surface with relative small outer dimensions.

Researches have shown that water supplied via a public water supply system generally contains an unacceptably high concentration of fibers, in particular asbestos fibers. The concentration of such fibers may range, e.g., from some tens of thousands to some millions of fibers per liter of water. These are concentrations of fibers that can be detrimental to the health of man and animal or even be life-threatening. The fibers entering the human or animal body via the water accumulate in all kinds of organs, such as kidney and liver, and are hardly, if at all, released by the body. Unduly high concentrations of fibers in organs reduce the activity of these organs and additionally increase the risks of diseases and deviations, such as cancer. A major part of the fibers, in particular of the asbestos fibers which are particularly harmful, enters the water owing to the use of (asbestos) fiber-containing water pipes. This means that removal of the fibers in a water purification is hardly, if at all, useful since the fibers mainly enter the water only after the water purification.

When using a filter of the type described in the opening paragraphs, asbestos fibers, in particular the relatively small fibers, that is to say those having lengths below 10 µm, can easily pass the filtering wall. This has the result that the above health hazards to consumers of water from this known apparatus continue to exist.

At the end of the service life of the filter with active coal cover the filter can be changed. To this end part of the housing can be unscrewed, after which the filter can be grabbed and distracted from said housing, and a new filter can be placed and the housing reassembled. The used filter will be disposed of.

A major disadvantage of this known apparatus is that the filter and the active coal can be touched by the user when changing the filter. This can be dangerous to the health of the user, especially when asbestos fibers should be left on the filter or the active coal. Furthermore, the surroundings and the user could become contaminated with particles, bacteria and the like left on the filter or by the active coal itself. Moreover, if a filter of this known type were to filter out asbestos fibers, the filter and active coal would constitute chemical waste and could therefore not be disposed of uncovered, for reasons of health and environmental hazards.

US 5,078,876 discloses a water filtering apparatus comprising a cylindrical pre filter with a coaxial cylindrical active coal filter against said pre filter. During use water passes between the inlet and outlet side of the filtering apparatus via said pre filter and said active coal filter. The active coal filter is in the form of a cylindrical block filter. For changing the pre filter and filtering block part of the housing can be unscrewed, after which the filter, pre filter and filtering block can be distracted and changed. At least the pre filter and the active coal filter will be gripped directly by the user, thereby contacting the contamination of said filter and/or said coal filter.

US 4,714,546 discloses a water filtering apparatus having a cylindrical active coal filter, a first water discharge being provided for connection to a drink water tap and a second water discharge for connection to a tap for further water. Only the water being used potable water passes the active coal filter, thereby increasing the life cycle of said filter. In this known filtering apparatus the active coal filter once again is in a solid form and can be taken out of the housing after unscrewing part of said housing. During and after distraction of said filter from said housing its surface is exposed for contact by the user and the environment.

US 4,904,382 discloses a filtering apparatus for inter alia potable water, comprising a base part, to which a filtering unit can be connected. An ordinary, one piece filter is included in said cartridge, intended for filtering out specifically sized particles. A number of these units can be positioned one after the other for differently sized particles. In this apparatus, valve means are provided in the base part, closing the inlet- and outlet of the housing towards said filter. The filtering cartridge itself is open to the environment.

The object of the invention is to provide a filtering apparatus of the type described in the opening paragraphs, with which the above drawbacks are avoided while retaining the advantages. To this end, a filtering apparatus is characterized according to the invention by the features of the characterizing part of claim 1.

The housing enables the filtering apparatus to be installed in a water pipe in a clear and easy manner. The structure of the housing and the filter unit ensures that during use substantially the complete amount of water flowing through the housing is passed through the filter unit, so that maximum filtering is obtained.

A filter used for a relatively long period of time will sustantially be contaminated with asbestos or such fibers and possibly with bacteria. Such a filter cannot just be grasped and thrown away because it should be regarded as chemical waste. By stationarily including filtering means in an exchangeable part of the housing to form a filter unit; the risk to the environment as a result of asbestos fibers and bacteria is removed. In fact, the filtering means need no longer be removed from the housing. Supply and discharge holes can be easily sealed, e.g. with caps or with an automatic closure which reacts to uncoupling of the relevant part of the housing of the filter unit. Then the whole can be thrown away, preferably on a site specially equipped for the purpose, e.g. an asbestos container, a chemical waste container or an asbestos processing plant. Thus, both the health of the water consumers and the environment are saved with a filter unit according to the invention.

A depth filter has the advantage of very easily obtaining excellent and accurate filtering. For reasons of health and safety it is preferable to filter from the water substantially all the relative large fibers, that is to say preferably more than 99% of the fibers above 5 µm, and a large part of the somewhat smaller fibers, that is to say preferably more than 70% of the fibers above 0.5 µm. Asbestos fibers below 5 µm can be regarded as less detrimental to health.

A fiber size above 5 µm is to be understood in this connection to mean a length above 5 µm. According to a relevant Dutch initial standard NVN 2339 and standards for use as applied by the Netherlands labor inspection a maximum cross-section of 3 µm and a length-diameter ratio of 3:1 are started from. For other fiber lengths comparable standards can be used. Besides, these fiber ratios are only for purposes of illustration and by no means limit the invention.

In an advantageous embodiment a filtering apparatus is characterized according to the invention by the features of claim 2.

By arranging the absorbing means around the filter, there will always be, at least at standing water, sufficient contact in the filter between the filter and the absorbing means to transfer the bacteria and/or the elements determining smell and taste to/into the absorbing means. By surrounding only part of the filter with the absorbing means, the pressure drop can be reduced even further, if necessary.

In a further elaboration a filtering apparatus is characterized according to the invention by the features of claim 3, in particular of claims 3 and 4.

The use of granular, freely moving particles as or at least in the absorbing means has the advantage that the water pressure is not, at least very little, affected by the absorbing means, while the outer surface of the particles is relative large in comparison with the likewise relative large filter surface. Moreover, the particles will continually change places, so that the activity is further optimized.

In a preferred embodiment a filtering apparatus is characterized according to the invention by the features of claim 5.

In this embodiment excellent results are obtained at a long service life of the apparatus and minimum pressure losses, while the quality of the filtered water is excellent. At standing water only part of the filter is covered by the absorbing means, while at flowing water the particles are forced apart, preferably partly floating in the water, to obtain a maximum contact surface with the water and/or the filter and a minimum flow resistance.

In a further elaboration a filtering apparatus is characterized according to the invention by the features of claims 8 and 9.

A housing thus designed very easily enables the filter unit to be exchanged and the filtering apparatus to be mounted.

In a further elaboration it is very advantageous if a filtering apparatus is further characterized according to the invention by the features of claims 10 and 11.

By closing the connecting means in the housing when . uncoupling at least part of the housing, there is obtained the advantage of handling the filter unit or the filter, e.g. to exchange it for another one, without the necessity of removing the water supply pressure. Automatic operation of the closing means has the advantage of removing the risk of unexpectedly forgetting to close the connecting means. Besides, it is very advantageous in this respect if the connecting means to the part to be removed are likewise closed for supply and discharge of the water to the filter unit. Thus, water is prevented upon removal from flowing from the filter unit or the removed part of the housing.

In a further elaboration a filtering apparatus is characterized according to the invention by the features of claims 12 or 13.

A depth filter comprising a nominal filter and an absolute filter, both provided with permeable pores, easily enables excellent and closely controllable filtering of the water. The nominal filter can be positioned on the upstream side of the filter unit and preferably has a permeable pore size for filtering out fibers having a size in at least one direction of at least 5 µm. Fibers above 5 µm are assumed to be particularly dangerous to man and animal, for which reason it is preferred to arrange the filter unit in a manner such that as many fibers as possible, e.g. 99% or more, are filtered away. The absolute filter is then positioned on the downstream side of the filter unit and preferably has a permeable pore size for filtering out fibers having a size in at least one direction of at least 0.5 µm. Fibers above 0.5 µm but below 5 µm are still always dangerous to man and animal, for which reason it is preferred to arrange the filter unit in a manner such that many, e.g. 70% or more, of these fibers are filtered away.

The filter is preferably approximately cylindrical, and the water flows through the filtering wall from the outside to the inside. This has the advantage of obtaining a relatively large filtering surface with a relatively small volume. When the water passes through the filtering wall, the number of fibers decreases according as the water has penetrated further into the wall, while the circumferential length of the filtering wall continually decreases to the inside. Thus, the filtering effect of the filter is substantially improved.

In a further elaboration a filtering apparatus is characterized according to the invention by the features of claim 14.

Living bacteria will show a tendency to multiply in the filter unit and grow through the filtering wall. These drawbacks are avoided by including bacterial growth-inhibiting or bactericidal means in a filtering apparatus according to the invention. It is particularly advantageous if these means comprise an ultraviolet lamp because such an apparatus is easy to handle and is of simple construction, safe to the consumers and the environment, and has no influence on the water other than a purifying, bacterial growth-inhibiting or bactericidal effect.

By positioning the lamp or such means on the upstream side of the filter means, there is obtained the advantage that part of the bacteria in the water substantially does not, at least not alive, reach the filter means.

The invention further relates to a filter unit for use in a filtering apparatus according to the invention, which filter unit is characterized in an advantageous embodiment by the features of claim 16.

By providing the filtering wall, seen in the direction of flow, with pores of decreasing cross-section, first the relatively large fibers and gradually the smaller fibers are filtered from the water during use, so that the service life of a filter unit is increased since the large fibers adhere to the relatively large outer surface of the filtering wall and therefore cannot block the relatively smaller pores.

The invention further relates to a sanitary water apparatus, characterized by the features of claim 17.

In a sanitary water apparatus according to the invention fibers contained in the water supplied from, e.g., a public water supply system are filtered out when, e.g., consumption water is drawn off. The filtering apparatus is installed at some distance from fiber-containing, fiber-losing water pipes. It is thereby prevented that the consumer, during consumption of water drawn off from the draw-off point, also takes up fibers that might cause the above drawbacks and risks. This applies the more so as there is no risk of fibers entering the water between the filtering apparatus and the relevant draw-off point since walled-in water pipes are generally made of metal or plastic.

By adapting the filter, it can be ensured that during use also relatively short fibers, such as asbestos fibers having a length below 10 µm, are filtered from the water. Surprisingly, it has been found that substantially no pressure drop thereby occurs over the filter. However, this has the drawback that on and/or in the filter, in particular on the side facing the supply side thereof, a strong accumulation of living and dead bacteria occurs, which has the above effect to an increased extent. The absorbing means provided according to the invention therefore offer the advantage that these bacteria are thereby taken up at least partially, by adsorption and/or absorption, so that the changes of smell and taste of the water are inhibited, at least undone or favorably affected. It has been found that during use a very strong reduction of the amount of bacteria occurs in the water while a desired number or a desired concentration of bacteria can pass the filter and the absorbing means. Thus, water from an apparatus according to the invention complies with the health standards while pressure drop over the filter is substantially inhibited, at least can be kept within acceptable limits.

In an advantageous embodiment a sanitary water apparatus is characterized according to the invention by the features of claim 18.

By positioning a filtering apparatus near a draw-off point in a manner such that only water for that relevant draw-off point flows through the relevant filtering apparatus, it is ensured that much fewer fibers and bacteria enter the filtering apparatus than when positioning the filtering apparatus in a central connecting pipe near the supply pipe. Water that has to be drawn off for purposes other than consumption purposes, e.g. for washing, the toilet, and the like, can in fact pass along the or each filtering apparatus. Such a filtering apparatus therefore has a relatively long service life and, moreover, requires relatively little maintenance. Furthermore, the risk of health problems owing to bacteria is reduced even further.

Besides, it is of course also possible to connect different or even all the draw-off points in, e.g., a house or works behind one filtering apparatus, and also different filtering apparatuses can be installed one behind the other.

It is in particular very advantageous if in the or each water pipe for consumption water a filtering apparatus is installed for filtering fibers from the water flowing through during use. Thus, the main source of fibers in drinking water is removed in a easy and safe manner.

The invention additionally relates to a process for filtering fibers from mains water, in particular asbestos fibers, according to claim 20. The use of such a process has health-enhancing advantages.

Further advantageous elaborations on the apparatuses and process according to the invention are given in the other subclaims and the specification.

Besides, it is observed that U.S. patent 5,149,437 discloses an apparatus for purifying water, comprising in a housing three layers of different materials stacked between an inlet end and an outlet end. Water flows successively through these three layers. The first layer is arranged to enter into a redox reaction, the second layer consists of activated carbon, and the third layer comprises a granulate for weak acid ion exchange. This known apparatus has the drawback that relatively much pressure loss occurs in the water owing to the flowing through of the complete layers of material. Moreover, this filter is of relatively complicated construction, and in especially the activated carbon strong contamination and bacterial growth will occur as a result of the enclosure as intermediate layer.

In explanation of the invention, there will be described practical examples of a sanitary water apparatus, a filtering apparatus, a filter unit, a draw-off tap, and a process, with reference to the accompanying drawings. In these drawings:
Fig. 1 is a diagrammatic representation of a first embodiment of a sanitary water apparatus according to the invention;
Fig. 2 is a diagrammatic representation of a second embodiment of a sanitary water apparatus according to the invention;
Fig. 3 is a part-sectional side view, taken along line III - III of Fig. 4, of a first embodiment of a filtering apparatus according to the invention, at standing water;
Fig. 3A shows an alternative embodiment of a base part for a filtering apparatus according to the invention, at flowing water;
Fig. 4 is a part-sectional top view of a filtering apparatus;
Fig. 5 is a part-sectional side view of a second embodiment of a filtering apparatus according to the invention; and
Fig. 6 shows a tap provided with means for connecting three pipes.

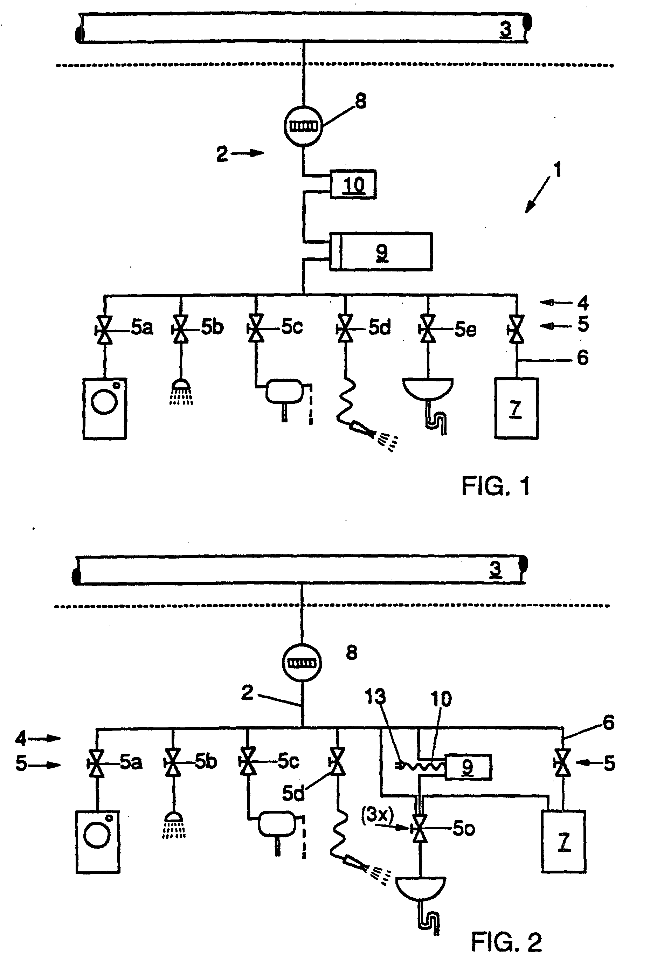

Fig. 1 shows a sanitary water apparatus, as, e.g., suitable for use in a private house, a works, an institution or the like. For simplicity's sake, the specification will always start from a private house situation. The sanitary water apparatus 1 is connected via a connecting pipe 2 to a supply pipe 3, e.g. a water pipe of a public water supply system. The connecting pipe 2 indoors divides into a large number of draw-off pipes 4, each ending, optionally via further branches, in a draw-off point 5, e.g. a washing machine tap 5A, a shower tap 5B, a WC tap 5C, an exterior tap 5D, or a tap 5E at a sink or washbasin. Moreover, a pipe 6 leads to a hot-water system 7, e.g. a boiler, a geyser or a central heating system.

Transport and other pipes of a public supply system are generally built up from asbestos cement or such fiber-containing and fiber-releasing materials. When water flows through these pipes under relatively high pressure. a large number of fibers are released from the walls of the pipes. These fibers are included in the water and carried to the sanitary water apparatuses connecting to the public supply system. From there they are transmitted to man and animal via the draw-off means during, e.g., direct water consumption or when using the water for food and drink preparation. These organisms do not get rid of the fibers, in particular asbestos fibers, anymore. There is often found an amount ranging from 40,000 to 2,000,000 fibers per liter, while in view of the consumers' health only a fraction of that number of fibers is allowable. By way of illustration, standards for asbestos fibers in air, such as Dutch initial standard VNV 2939, only allow ten fibers per liter of air, above 5 µm. Besides, fibers enter into the tap water from other sources as well.

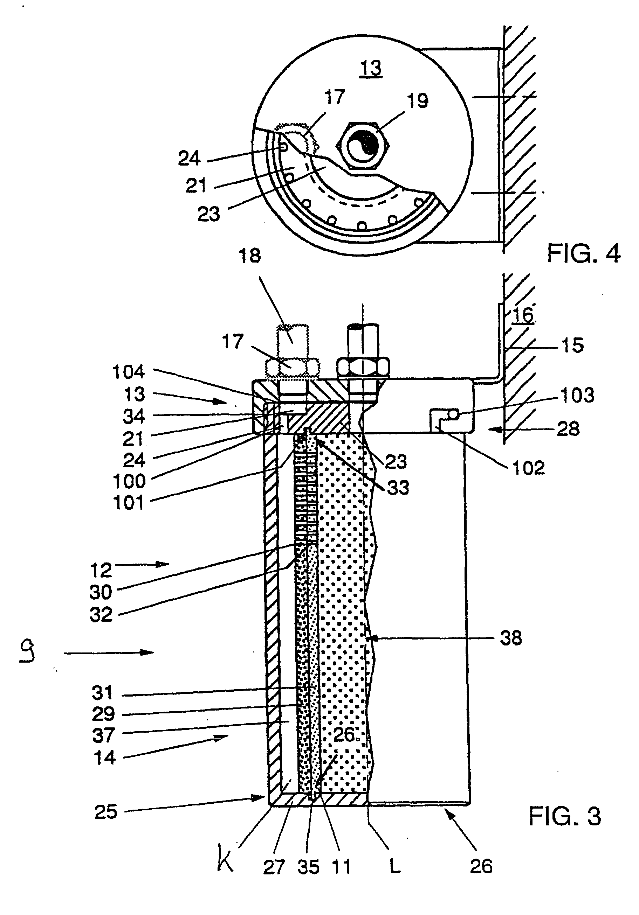

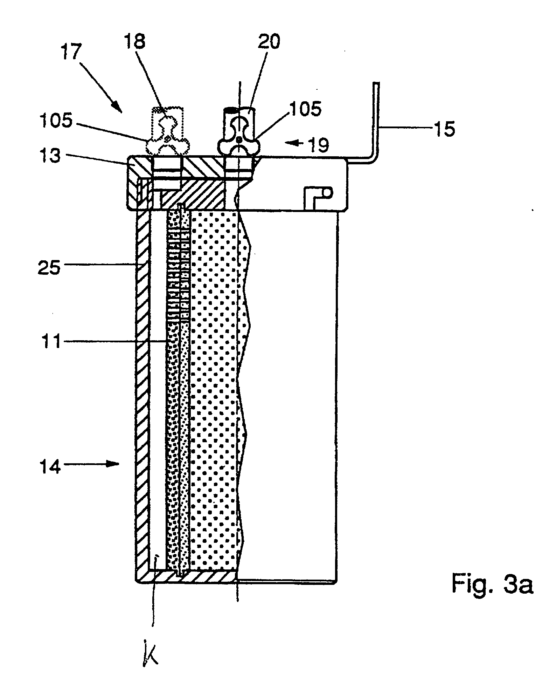

Arranged in the connecting pipe 2 is a water meter 8. Moreover, immediately after the water meter 8 or at least before the branches 4 a filtering apparatus 9 is installed in the connecting pipe 2 for filtering from the water at least a large number of the fibers contained in the water, in particular fibers having a size of more than 0.5 µm, and bacteria. The construction and operation of the filtering apparatus 9 will be explained in more detail hereinbelow, in particular on the basis of Figs. 3 - 5. Before the filtering apparatus 9, seen in the direction of flow, a bacterial growth-inhibiting or bactericidal apparatus 10 is additionally installed in the connecting pipe 2, which apparatus at least largely prevents bacteria from reaching, at least alive, the filtering apparatus 9 and possibly the pipe system positioned behind it.

Since in this embodiment of a sanitary water apparatus 1 the filtering apparatus 9 is installed in the central connecting pipe 2, only one filtering apparatus 9 is necessary for the complete sanitary water apparatus 1, which is advantageous with respect to installation and maintenance. This is particularly appropriate when releatively few fibers are found in the water.

Fig. 2 shows an alternative embodiment of a sanitary water apparatus according to the invention. In this embodiment a filtering apparatus 9 is included in a number of first pipes 4, in the vicinity of the relevant draw-off tap 5. The filtering apparatus 9 may correspond, at least as regards construction and use, to a filtering apparatus 9 according to Figs. 3 - 5. In this embodiment such a filtering apparatus 9 is included particular or only in draw-off pipes 4 which open into a draw-off point 5 for water intended for consumption by man or animal. This has the advantage that during use only part of the total volume of water that passes the water meter 8 flows through a filtering apparatus 9, namely the part of the volume intended for human or animal consumption. Since the major part of the volume of water is used for other purposes, e.g. for washing, dishwashing, spraying a garden, cleaning activities, aquariums, or heating systems, the service life of a filter 11 and the absorbing means K in the relevant filtering apparatuses 9 is substantially increased.

It is of course also possible to install a filtering apparatus 9 both before the branches 4 and near a number of taps 5. Thus it is possible, e.g., to centrally filter rather coarsely, following which the water intended for consumption can be filtered finely. This prevents damages occurring in apparatuses in the pipe system that are sensitive to coarse fibers, while the service life of the filter 11 in the central filtering apparatus 9 is prolonged. In each of the possible embodiments a bacterial growth-inhibiting or bactericidal apparatus 10 can be included near one, a series or all of the filtering apparatuses, that is to say both in the connecting pipe 2 near the water meter 8 and in the draw-off pipes 4 forming the branches.

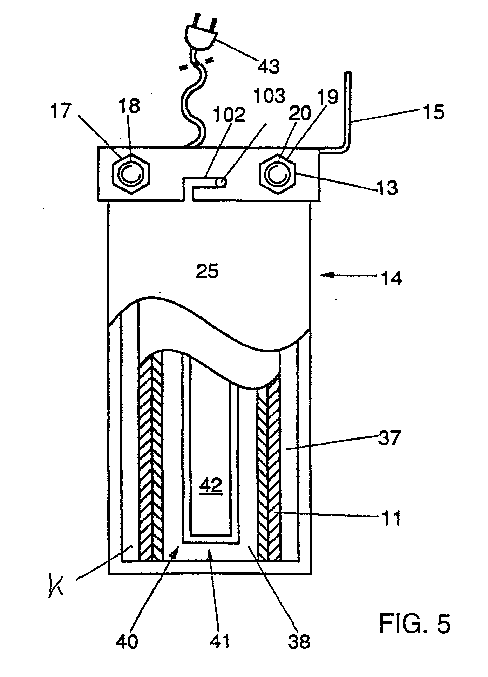

Figs. 3 and 4 show a first embodiment of a filtering apparatus 9 according to the invention. This filtering apparatus 9 comprises a housing 12, a filter 11 included therein, and activated carbon particles included between the housing 12 and the outside of the filter 11. The housing 12 comprises a substantially cylindrical base part 13 and a filter unit 14 easily detachably connected therewith. In the embodiment shown a hooked suspension bracket 15 extends from the base part 13 and rigidly connects the filtering apparatus 9 with, e.g., a wall 16. The longitudinal axis L of the base part 13 preferably extends approximately vertically.

In mounted condition, the base part 13 is provided at the top with first connecting means 17 for a water supply pipe 18 and second connecting means 19 for a water discharge pipe 20. The connecting means 17, 19 may be, e.g., means suitable for soldering or glueing, or e.g. clamp or screw couplings. At the side facing away from the connecting means 17, 19 the base part 13 is provided with an intermediate ring 100. At the side facing the connecting means 17, 19 the intermediate ring 100 is provided with an annular recess 21 extending near the circumferential edge and a central tubular passage 22. Therefore, an annular wall 23 extends between the recess 21 and the passage 22. Included between the base part 13 and the intermediate ring 100 are two packings 104 to provide a watertight connection. During use, the first connecting means 17 are in fluid communication with the first recess 21, and the second connecting means 19 are in fluid communication with the second passage 22. A large number of first passages 24 extend from the bottom of the recess 21 to the side of the intermediate ring 100 facing away from the connecting means 17, 19, approximately parallel to the longitudinal axis L of the base part 13. At the side facing away from the recess 21 the intermediate ring 100 is provided with an annular groove 101 situated between the open ends of the first 21 and second passages 22.

The filter unit 14 comprises a substantially cylindrical casing 25 closed at one end 26 by an end wall 27, while the opposite side 28 is open. The open end 28 has such an inside cross-section that the casing 25 can fittingly and at least, optionally by means of a packing 34, water-sealingly abut against the base part 13. To connect the casing 25 with the base part 13, bayonet connecting means 102, 103 are provided. A substantially tubular, cylindrical filter 11 is retained within the casing 25, with the longitudinal axes L of the casing 25, the filter 11 and the base part 13, in mounted condition, approximately coinciding.

The filter 11 is of the depth filter type and has a first outside layer 29 having relatively large pores 30 and a second inside layer 31 having relatively small pores 32. The first 29 and the second layer 31 are intimately connected together. The cross-section of the central passage in the filter 11 is smaller than the cross-section of the annular groove 101. The cross-section of the outer circumference of the filter is larger than the cross-section of the annular groove 101. Therefore, with a first end facing the base part 13 the filter 11 can fittingly connect to and/or extend into the annular groove 101 in the base part 13 and be water-sealed against it, e.g. by means of a packing 33. The casing 25 is provided on the inside of the end wall 27 with a second annular ring 35 which can fittingly and, optionally by means of a packing 36, water-sealingly abut against the second end of the filter 11. The filter 11 has an axial length selected such that when the casing 25 is mounted on the base part 13 and includes the filter 11, the filter 11 sealingly connects to the base part 13, on the one hand, and sealingly connects to the casing 25, on the other hand. In an advantageous embodiment, not shown, the annular grooves 35, 101 are replaced by annular rings having a somewhat sharply tapering cross-section. When placing the filter 11 within the casing 25, these rings intersect in the ends of the filter 11, thereby simultaneously ensuring water sealing and a stationary positioning of the filter. The mounting of the filter 11 is therefore very easy and, moreover, hardly critical, while the filter can be easily provided with right flat ends.

During use, the filter 11 therefore divides the inner space of the filtering apparatus 9 into two spaces. The first space 37 is situated outside the filter 11 and is in direct fluid communication with the water supply pipe 18, the second space 38 is situated within the filter 11 and is in direct fluid communication with the water discharge pipe 20. The first 37 and the second space 38 are only in fluid communication with each other via the pores 30, 32 of the filter.

Included in the first space 37 are absorbing means K for receiving becteria that remain on the filter 11 and/or are contained in the water. In the practicle example shown, the absorbing means K are activated carbon particles, e.g. granular or otherwise granulate-like. Absorbing means K as referred to herein are at least comprehensive means for removing from the water, by ad- and/or absorption, bacteria or at least substances introduced into the water by bacteria or other organic material, which adversely affect the taste and smell of the water or which are less appropriate for reasons of health. The use of activated carbon for inhibiting taste and smell changes in the water is known per se. Comparable materials may also be used for this purpose.

The first space 37 is not completely filled with the activated carbon particles. Consequently, during use, when water flows through the filtering apparatus 9, these particles can freely move in the water current (Fig. 3A), without a great flow resistance being generated. This means that a pressure drop over the filtering apparatus 9 is reduced to a minimum. Furthermore, these particles have the advantage of a relatively large surface with respect to the volume, so that a large reactive surface is obtained. Moreover, the particles continually change their positions with respect to each other and the filter 11, so that the absorbing properties of the particles and the relatively large surfaces thereof are optimally used. At standing water in the filtering apparatus 9 the activated carbon particles will sink downwards and acquire a relatively dense packing while abutting against a part of the outer surface of the filter 11. Through this direct contact between the particles and the filter 11 further contaminations, such as dead bacteria, can be easily taken over by the particles from the filter 11.

It has been found that excellent results are obtained with a filling of the first space 37, at least at standing water, of less than 60%, preferably between 20% and 50%. A degree of filling of about 33% gave excellent results (Fig. 3). The particles must have such dimensions that they cannot pass the filter 11 and cannot flow away via the connecting means 17, while, as indicated, a large specific surface is advantageous. It has been found that excellent results are obtained by using activated carbon particles having a size ranging from 0.1 mm to 15 mm, preferably from 2 mm to 10 mm. Excellent results are obtained with granules having an average size of about 5 mm. The density of the granules preferably ranges from 50 kg/m³ to 800 kg/m³, more preferably from 200 kg/m³ to 500 kg/m³. Very advantageous results are obtained with granules having a density of about 300 kg/m³. Such activated carbon particles are marketed by the firm of Norit B.V. unter the name of NORIT PK 3-5. Besides, the above values are only for the purpose of illustration and should by no means be explained as limitative.

By way of illustration, a number of sizes are given for a filtering apparatus according to the invention, which, however, should be understood as examples and in no respect as limitative. A filtering apparatus 9 may have, e.g., a length of 310 mm and a cross-section of 100 mm. In this case the filter has, e.g., a length of 244 mm, an outer cross-section of more than 57 mm, and an inner cross-section of less than 50 mm. The filter 11 is made of, e.g., cloth or foil. The outer layer 29 has, e.g., pores 30 having a cross-section of about 5 µm, the inner layer 31 has pores 32 having a cross-section of about 0.5 µm. A filter suitable for use in an apparatus according to the invention is, e.g., a filter marketed in the U.S.A. by the firm of Corning Costar Inc. unter the trade name of COAX®. Such a filter is made of two components, namely a fiber bundle made of polypropylene and a casing made of polyethylene. Such a filter has the advantage over filters having a different structure that the packing density of the structure does not change when the liquid pressure in the filtering apparatus increases or decreases. Moreover, such a filter has excellent filtering properties, and the throughflow time of water through the filter during the time of use (the so-called service life) remains constant. Comparable filters are also supplied by, e.g., the firms of Filtertite, Pall, and Millipore in the U.S.A. In an embodiment according to the invention, e.g. at a flow rate of 18 1/min and a water pressure of 1 bar, a pressure difference between the two sides of the filter can be kept at about 10% or less, which is generally acceptable. At least the sizes and ratios of the pores are magnified in the drawings for clarity's sake and are not shown in accordance with reality.

A filtering apparatus according to the invention can be used as follows.

The filtering apparatus 9 is attached to a wall 16, and a supply pipe 18 and a discharge pipe 20 are attached to respectively the first 17 and second connecting means 19. Subsequently, water is passed under pressure via the supply pipe 18 and the passages 24 to the first space 37 outside the filter 11 but within the casing 25. As a result of the water pressure, the water is pressed between the particles 60 and through the filter wall, first through the first pores 30, then through the second pores 32. From the second pores the water then flows through the second space 38 and leaves the filtering apparatus 9 through the second passage 22 to the water discharge pipe 20, e.g. in the direction of a water tap 5, as shown in Figs. 1 and 2. The water supply pipe 18 and the water discharge pipe 20 form part of the connecting pipe 2 and/or a draw-off pipe 4.

During throughflow of the filter 11 fibers contained in the water, in particular asbestos fibers, are filtered from the water in at least two steps. In the first instance, at least fibers that cannot pass the first pores are left on the outside of the filter 11, or in the first pores 30, as the case may be. The outer layer 29 therefore serves as a first filter. Then the water passes the second layer 31, and fibers that apparently can pass the first pores 30 but cannot pass the second pores 32 are left in the filter 11, or in the second pores 32, as the case may be. The second layer 31 serves as an end filter. When using a filter 11, as, e.g., described above, at least 60%, and preferably more than 90%, of the fibers above 0.5 µm and at least 75%, and preferably more than 99%, of the fibers above 5 µm are collected in the filter 11.

Moreover, left on the fibers on the filter 11 and on the activated carbon particles are bacteria and the like, which are taken up and retained by the activated carbon particles. Thus, quite a lot of bacteria contained in the water are filtered therefrom, and moreover, (dead) bacteria are removed from the filter 11, and substances detrimental to health and smell- and taste-spoiling substances in the water are at least prevented from flowing through the filter 11.

The water that has passed the filter 11 is thus safe and suitable for consumption, at least as regards fibers and bacteria contained therein.

At the end of the service life of the filter 11, that is to say when the filter 11 has been contaminated with fibers or otherwise to an extent such that its function is completely or largely lost or too much water pressure loss occurs, the filter 11 must be replaced. To this end, in the filtering apparatus 9 as shown the filter unit 14 is detached from the base part 13, after the water pressure has been removed. The filter unit 14 is preferably of such construction that it can be exchanged as a whole, that is to say casing 25, filter 11, and absorbing means K. The casing 25 is preferably made of a plastic that can be recycled, e.g. polyethylene, and, in a very advantageous embodiment, is made of already recycled plastic.

After use, the filter unit 14 is to be regarded as chemical waste. In order to prevent contamination of and danger to the environment after removal, sealing means (not shown in the drawings) are provided for sealing the openings in the filter unit. These sealing means may be constituted, e.g., by a sealing cap for fitting over the casing 25.

In an advantageous embodiment as shown in Fig. 3A, the base part 13 is provided with two ball taps 105 for closing respectively the water supply pipe 18 and the water discharge pipe 20 when the filter unit 14 is removed. This has the advantage that the filter unit 14 can be exchanged without the necessity of first removing the water pressure of the entire sanitary water apparatus 1. Besides, the ball taps 105 can of course also be taps of another type and can be manually or automatically operated, e.g. under the influence of a rotation of the casing 25 with regard to the base part 13.

Fig. 5 shows an alternative embodiment of a filtering apparatus according to the invention. This filtering apparatus substantially has the same structure as the above-described embodiment, and similar parts are denoted by the same reference numerals. In this embodiment, however, bactericidal or at least bacterial growth-inhibiting means 40 are included in the filtering apparatus 9. To this end, a transparent housing part 41 extends concentrically within the second space 38, within which housing part 41 a lamp 42 emitting ultraviolet light is arranged which can be connected to an electricity grid or other supply via a connecting cable 43. During use, bacteria contained in the water and entering the filter 11 are killed by the ultraviolet light or at least growth-inhibited, and they are taken up by the absorbing means K. Moreover, the bacteria are thus prevented from growing through the filter. The fact is that most of the bacteria contained in the water cannot pass a filter as described above in the water, but can grow through the filter 11. The ultraviolet light therefore ensures, together with the absorbing means K, that the water leaving the filtering apparatus is relatively bacteria-free.

The bactericidal or bacterial growth-inhibiting means have the advantage of even further prolonging the service life of the filter 11, which is at least advantageous both for the consumers and for the environment.

A filtering apparatus 9 according to the invention was used for filtering water taken from a water system at Eemnes, Holland. About 500 ml water were analyzed, while in particular the concentration of fibers having a size of 0.8 µm or more was determined, as well as the total germ count, E.Coil germ count, and the chemical composition as prescribed in the Compendium Laboratoriumonderzoek Veedrinkwater (in translation: "Compendium Laboratory Research Cattle Drinking Water") (3rd edition, September 1994, pages 4 and 5). This analysis was carried out both before and after passing the water through a filter 9 of the above-described type.

| filtering | Allowable | Before filtering | After |
|---|---|---|---|
| | (n/mL) | (n/mL) | (n/mL) |
| Total germ count | < 100,000 | 800,000 | 5,400 |
| E.Coli germ count | < 100 | < 10 | < 10 |
| Fibers > 0.8 µm | - | 14,000 | - |

The other (chemical) values of the sample taken were, both before and after filtering, within the acceptable limits. In particular also the smell, color, and clarity of the water were considered good after filtering, as also was the taste. The values found are all of such a nature that the filtered water is suitable for human consumption. Surprisingly, it has been found that even in case of long service lives and continuous use of a filtering apparatus according to the invention the quality of the filtered water remains at substantially the same level.

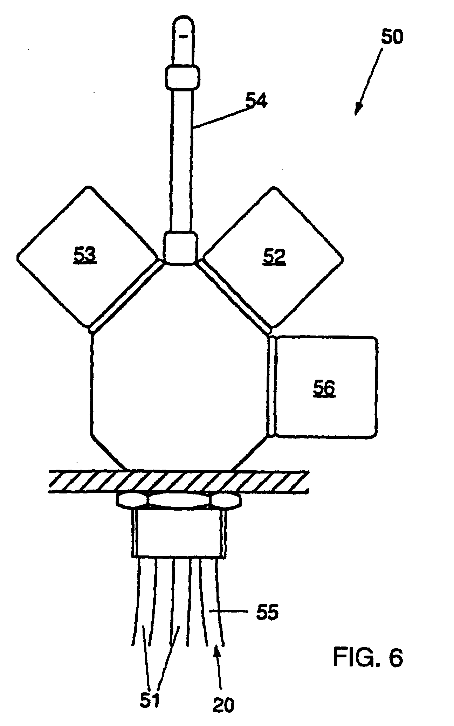

Fig. 6 shows a draw-off tap 50 which is particularly advantageous when used in a sanitary water apparatus according to the invention. This draw-off tap 50 is of the mixer tap type and is conventionally provided with two connecting means 51 for respectively a hot water pipe and a cold water pipe. Via a first and a second regulating tap 52 and 53, respectively, hot and cold water can be mixed and dispensed via an outlet 54. The first 52 and the second regulating tap 53 are separately controllable or are designed as a thermostat-controlled tap. The draw-off tap 50 is further provided with third connecting means 55 for connecting a water discharge pipe 20 and a filtering apparatus 9 thereto and a third regulating tap 56 for regulating the dispense of filtered water. Such a draw-off tap 50 has the advantage that with one tap both filtered water made suitable for consumption and "normal" unfiltered water can be dispensed. Besides, such a draw-off tap 50 is also suitable for use in water supply apparatuses of a different type, e.g. one in which boiling water or chlorine-free water can be instantaneously supplied beside "normal" water.

The invention is by no means limited to the embodiments described in the specification and shown in the figures. Many variations are possible within the scope of the appended claims. Thus, a filtering apparatus according to the invention can be included in a water pipe in many ways, e.g. in a manner such that the connecting means for a supply pipe and a discharge pipe can be included on opposite sides or extend in a direction approximately at right angles to or at least lying at an angle to the longitudinal axis of the filter. Moreover, the filter may be e.g. flat, in which structure, during use, water flows from one side of the filter to the opposite side. Furthermore, the filtering apparatus may form part of, e.g., a draw-off tap or a water meter.

A base part and a casing of a filtering apparatus can also be of different design and, e.g., be suitable for coupling by means of a screw connection or by means of click edges, in which design the filter may be exchangeable, optionally apart from the casing. The bactericidal or bacterial growth-inhibiting means may be of different construction, e.g. apart from the filtering apparatus or in the form of chemical means. The ultraviolet light may be obtained with the aid of other means, e.g. a light filter.

In some embodiments the filter may comprise only one filter layer or more than two layers, e.g. when filtering is to be effected even more accurately. Each filter layer may have pores of one size or have pores of different sizes. Moreover, other filter materials may be used, e.g. filter materials that bind specific fibers, in particular asbestos fibers, through chemical and/or mechanical means. Furthermore. a filtering apparatus according to the invention may be combined with other filtering means, e.g. for filtering chlorine or lime from the water, while the tap may be provided with more than three connecting means.

The absorbing means may be of different construction, e.g. comprise a porous, coherent mass, or have the shape of a cassette filled with particles, which cassette may or may not be exchangeable together with the filter 11. Moreover, the absorbing means may (also) be included in the second space, that is to say at the downstream side of the filter 11, so that at flowing water the particles are somewhat pressed away from the filter wall. Moreover, other means may be used, instead of or together with activated carbon.

## Claims

1. A filtering apparatus for filtering particles from flowing water, comprising a housing (12) provided with first connecting means (17) for a supply pipe (18) and second connecting means (19) for a discharge pipe (20), a filter (11) being enclosed within the housing (12), said filter (11) separating the first connecting means (17) from the second connecting means (19), in a manner such that during use water flowing from the supply pipe (18) to the discharge pipe (20) must pass the filter (11), which filter (11) is of the depth filter type comprising at least one filtering layer provided with a large number of relatively small pores, wherein first connecting means (17) and absorbing means (K), in particular activated carbon, are included near the filter (11), in a manner such that during use bacteria left on the filter (11) are taken up by the absorbing means, so that changes of smell and taste of the water are substantially inhibited, wherein the filter (11) is arranged to filter fibers, in particular asbestos fibers, at least from the water, the pores being such that said fibers can not pass said pores, said fibers included in the water being left during use in or on the filter (11) substantially on the side facing the first connecting means (17), **characterized in that** at least the filter (11) and the absorbing means (K) are enclosed within a filter unit (14), which is removably connected to a base part (13) of the housing (12), such that said filter unit (14), including the filter (11), the absorbing means (K) and the fibers can be dispensed of without contact between the fibers on the filter (11) and the operator, the fibers staying enclosed by said filter unit (14).

2. A filtering apparatus according to claim 1, **characterized in that** the absorbing means (K) at standing water only partly surround the filter, preferably on the side facing the first connecting means (17).

3. A filtering apparatus according to claim 1 or 2, **characterized in that** the absorbing means (K) contain granular particles, in particular activated carbon particles, which during use can at least partly freely move in the water flow passing the filter (11) but cannot pass the filter (11) and are enclosed within the housing (12).

4. A filtering apparatus according to claim 3, **characterized in that** the granular particles have a size ranging from 0.1 mm to 15 mm, more in particular ranging from 2 mm to 10 mm, and preferably have an average size of about 5 mm, and a density ranging from 50 kg/m³ to 800 kg/m³, more in particular ranging from 200 kg/m³ to 500 kg/m³, and preferably about 300 kg/m³.

5. A filtering apparatus according to claim 3 or 4, **characterized in that** at standing water within the housing (12) less than 60%, more in particular between 20% and 50%, and preferably about 33% of the surface of the filter (11) is covered on one side by the absorbing means (K), while at flowing water the granular particles are at least partly forced apart.

6. A filtering apparatus according to any one of claims 1 - 5, **characterized in that** the filter (11) and the absorbing means (K) are cartridge-like and easily placeable within the housing (12) and removable therefrom for replacement by another filter cartridge (11) with absorbing means (K).

7. A filtering apparatus according to claim 6, **characterized in that** the filter (11) and the absorbing means (K) are rigidly connected with a part (14) being detachable from the housing (12) and integrally exchangeable.

8. A filtering apparatus according to any one of claims 6 or 7, **characterized in that** the housing (12) comprises at least two parts (13, 14) to be coupled, a first part (13) comprising the first (17) and second connecting means (18), and a second part (14) comprising the filter (11) and the absorbing means (K).

9. A filtering apparatus according to claim 8, **characterized in that** the second part (14) can be easily coupled to and uncoupled from the first part (13) by means of a bayonet coupling or such coupling means (102, 103).

10. A filtering apparatus according any one of claims 6 - 9, **characterized in that** the housing (12) comprises means (105) for closing at least the first (17) and second connecting means (19) when the filter unit (11, 14, K) is removed or replaced.

11. A filtering apparatus according to claim 10, **characterized in that** the closing means (105) are arranged to come automatically into action when at least part of the housing (12) is uncoupled.

12. A filtering apparatus according any one of claims 1 - 11, **characterized in that** the filter (11) comprises a first filter (29) and an end filter (31).

13. A filtering apparatus according any one of claims 1 - 12, **characterized in that** the filter (11) is arranged to filter from flowing water more than 60% and preferably at least 90% of the fibers having a length of at least 0.5 µm, and more than 75% and preferably at least 99% of the fibers having a length of at least 5 µm.

14. A filtering apparatus according any one of claims 1 - 13, **characterized in that** the filtering apparatus (9) comprises bacterial growth-inhibiting and/or bactericidal means (10, 40).

15. A filter unit for use in a filtering apparatus according to any one of claims 1 - 14, **characterized in that** the filter unit (14) comprises a housing (12) which encloses at least a filter (11) of the depth-type and an absorbing means (K) only partly surrounding said filter (11) within said housing (12), said absorbing means (K) being in direct contact with said filter (11),
the filter unit having a filtering wall consisting of at least two layers (29, 31), of which a layer (29) facing during use the supply side for water to be filtered has larger pores (30) for passing water than the or each layer (31) provided on the opposite side.

16. A sanitary water apparatus, comprising a base pipe and a number of draw-off points, a filtering apparatus (9) according to any one of claims 1 - 14 being included in the sanitary water apparatus (1) between the base pipe (3) and the or at least one draw-off point (5).

17. A sanitary water apparatus according to claim 16, **characterized in that** the or each filtering apparatus (9) is arranged near a draw-off point (5).

18. A sanitary water apparatus according to claim 16 or 17, **characterized in that** the filtering apparatus (9) directly connects to the base pipe (3), a series of draw-off points (5A-E) being provided at some distance from the filtering apparatus (9).

19. A process for filtering fibers from mains water, a number of filtering apparatuses according to claim 1 being employed in the process, fibers being filtered in the or each filtering apparatus (9) by means of a filter (11) from water flowing through the filter (11), which fibers filtered from the water are left on or in the or each filtering apparatus (9) and can be periodically removed therefrom by a consumer, together with at least part of the filter (11) said water being passed near the filter (11) through absorbing means (K) for absorbing odorants/flavourings, bacteria being taken up by the absorbing means (K), wherein the water pressure is substantially not effected by the absorbing means, **characterized in that** the absorbing means (K) and the filter (11) are removed together with at least part of the housing (12), whereby contact between the fibers and the consumer is prevented by said part of the housing enclosing the filter (11) and the absorbing means (K), after which said part of the housing (12) is disposed of together with said filter (11), said absorbing means (K) and said fibers.

## Patentansprüche

1. Filtervorrichtung zum Filtern von Partikeln aus fließendem Wasser mit einem Gehäuse (12), das mit einer ersten Anschlußeinrichtung (17) für ein Zufuhrrohr (18) und einer zweiten Anschlußeinrichtung (19) für ein Ablaßrohr (20) versehen ist, einem in dem Gehäuse (12) enthaltenen Filter (11), das die erste Anschlußeinrichtung (17) von der zweiten Anschlußeinrichtung (19) derart trennt, daß im Gebrauch von dem Zufuhrrohr (18) zum Ablaßrohr (20) fließendes Wasser das Filter (11) durchlaufen muß, wobei das Filter (11) vom Tiefenfiltertyp mit wenigstens einer Filterschicht ist, die mit einer großen Zahl relativ kleiner Poren versehen ist, wobei die erste Anschlußeinrichtung (17) und ein Absorptionsmittel (K), insbesondere Aktivkohle, nahe dem Filter (11) derart vorgesehen sind, daß auf dem Filter (11) verbliebene Bakterien im Gebrauch von dem Absorptionsmittel aufgenommen werden, so daß Veränderungen des Geruchs und des Geschmacks des Wassers im wesentlichen verhindert werden, wobei das Filter (11) zum Filtern von Fasern, insbesondere Asbestfasern, zumindest aus dem Wasser ausgebildet ist, wobei die Poren derart ausgebildet sind, daß die Fasern sie nicht passieren können, wobei die im Wasser enthaltenen Fasern im Gebrauch in oder auf dem Filter im wesentlichen auf der der ersten Anschlußeinrichtung (17) zugewandten Seite verbleiben, **dadurch gekennzeichnet, daß** zumindest das Filter (11) und das Absorptionsmittel (K) in einer Filtereinheit (14) enthalten sind, die lösbar mit einem Basisteil (13) des Gehäuses (12) verbunden ist, so daß die Filtereinheit (14) aus Filter (11), Absorptionsmittel (K) und den Fasern ohne Kontakt zwischen den Fasern auf dem Filter (11) und dem Benutzer entsorgt werden kann, wobei die Fasern von der Filtereinheit (14) umschlossen bleiben.

2. Filtervorrichtung nach Anspruch 1, **dadurch gekennzeichnet, daß** das Absorptionsmittel (K) bei stehendem Wasser das Filter nur teilweise, vorzugsweise auf der der ersten Anschlußeinrichtung (17) zugewandten Seite umgibt.

3. Filtervorrichtung nach Anspruch 1 oder 2, **dadurch gekennzeichnet, daß** das Absorptionsmittel (K) granulare Partikel, insbesondere Aktivkohlepartikel, enthält, die sich während des Gebrauchs zumindest teilweise frei in der das Filter (11) passierenden Wasserströmung bewegen können, jedoch das Filter (11) nicht passieren können und im Gehäuse (12) gehalten sind.

4. Filtervorrichtung nach Anspruch 3, **dadurch gekennzeichnet, daß** die granularen Partikel eine Größe zwischen 0,1 mm und 15 mm, insbesondere zwischen 2 mm und 10 mm, und vorzugsweise eine Durchschnittsgröße von ungefähr 5 mm, und eine Dichte von 50 kg/m³ bis 800 kg/m³, insbesondere von 200 kg/m³ bis 500 kg/m³, und vorzugsweise ungefähr 300 kg/m³, aufweisen.

5. Filtervorrichtung nach Anspruch 3 oder 4, **dadurch gekennzeichnet, daß** bei stehendem Wasser im Gehäuse (12) weniger als 60%, insbesondere zwischen 20% und 50%, und vorzugsweise ungefähr 33% der Oberfläche des Filters (11) auf einer Seite von dem Absorptionsmittel (K) bedeckt ist, während bei fließendem Wasser die granularen Partikel zumindest teilweise auseinander gedrückt werden.

6. Filtervorrichtung nach einem der Ansprüche 1-5, **dadurch gekennzeichnet, daß** das Filter (11) und das Absorptionsmittel (K) patronenartig ausgebildet sind und leicht in dem Gehäuse (12) angeordnet und zum Ersatz durch eine andere Absorptionsmittel (K) aufweisende Filterpatrone (11) aus diesem entnehmbar ist.

7. Filtervorrichtung nach Anspruch 6, **dadurch gekennzeichnet, daß** das Filter (11) und das Absorptionsmittel (K) fest mit einem Teil (14) verbunden sind, das vom Gehäuse (12) lösbar und einstückig austauschbar ist.

8. Filtervorrichtung nach einem der Ansprüche 6 oder 7, **dadurch gekennzeichnet, daß** das Gehäuse (12) zumindest zwei zu verbindende Teile (13, 14) aufweist, nämlich ein erstes Teil (13) mit der ersten (17) und der zweiten Anschlußeinrichtung (18) und ein zweites Teil (14) mit dem Filter (11) und dem Absorptionsmittel (K).

9. Filtervorrichtung nach Anspruch 8, **dadurch gekennzeichnet, daß** das zweite Teil (14) durch eine Bajonettkupplung oder eine derartige Kupplungseinrichtung (102, 103) einfach mit dem ersten Teil (13) verbindbar und von diesem lösbar ist.

10. Filtervorrichtung nach einem der Ansprüche 6 - 9, **dadurch gekennzeichnet, daß** das Gehäuse (12) eine Einrichtung (105) aufweist, um wenigstens die erste (17) und die zweite Anschlußeinrichtung (18) zu schließen, wenn die Filtereinheit (11, 14, K) entfernt oder ausgetauscht wird.

11. Filtervorrichtung nach Anspruch 10, **dadurch gekennzeichnet, daß** die Schließeinrichtung (105) automatisch wirkt, wenn wenigstens ein Teil des Gehäuses (12) gelöst wird.

12. Filtervorrichtung nach einem der Ansprüche 1-11, **dadurch gekennzeichnet, daß** das Filter (11) ein erstes Filter (29) und ein Endfilter (31) aufweist.

13. Filtervorrichtung nach einem der Ansprüche 1-12, **dadurch gekennzeichnet, daß** das Filter (11) derart ausgebildet ist, daß es aus fließendem Wasser mehr als 60 % und vorzugsweise wenigstens 90% der Fasern mit einer Länge von wenigstens 0,5 µm und mehr als 75% und vorzugsweise wenigstens 99% der Fasern mit einer Länge von wenigstens 5 µm filtert.

14. Filtervorrichtung nach einem der Ansprüche 1-13, **dadurch gekennzeichnet, daß** die Filtervorrichtung (9) Mittel (10, 40) aufweist, die bakterielles Wachstum verhindern und/oder bakterizid sind.

15. Filtereinheit zur Verwendung in einer Filtervorrichtung nach einem der Ansprüche 1-14, **dadurch gekennzeichnet, daß** die Filtereinheit (14) ein Gehäuse (12) aufweist, das wenigstens ein Filter (11) vom Tiefentyp und ein Absorptionsmittel (K) aufweist, welches das Filter (11) in dem Gehäuse (12) nur teilweise umgibt, wobei das Absorptionsmittel (K) in direktem Kontakt mit dem Filter (11) steht, wobei die Filtereinheit eine Filterwand aufweist, die aus wenigstens zwei Schichten (29, 31) besteht, von denen eine Schicht (29), die im Gebrauch der Zulaufseite von zu filterndem Wasser zugewandt ist, größere Poren (30) zum Durchlaß von Wasser hat als die oder jede auf der entgegengesetzten Seite vorgesehene Schicht (31).

16. Sanitärwasservorrichtung mit einem Basisrohr und einer Anzahl von Zapfstellen, wobei eine Filtervorrichtung (9) nach einem der Ansprüche 1-14 in der Sanitärwasservorrichtung (1) zwischen dem Basisrohr (3) und der oder wenigstens einer Zapfstelle (5) angeordnet ist.

17. Sanitärwasservorrichtung nach Anspruch 16, **dadurch gekennzeichnet, daß** die oder jede Filtervorrichtung (9) nahe einer Zapfstelle (5) angeordnet ist.

18. Sanitärwasservorrichtung nach Anspruch 16 oder 17, **dadurch gekennzeichnet, daß** die Filtervorrichtung (9) direkt mit dem Basisrohr (3) verbunden ist, wobei eine Reihe von Zapfstellen (5A-E) in einigem Abstand von der Filtervorrichtung (9) vorgesehen sind.

19. Verfahren zum Filtern von Fasern aus Leitungswasser, wobei eine Anzahl von Filtervorrichtungen nach Anspruch 1 in dem Verfahren verwendet wird, wobei Fasern in der oder jeder Filtervorrichtung (9) durch ein Filter (11) aus durch das Filter (11) fließendem Wasser gefiltert werden, wobei die aus dem Wasser gefilterten Fasern auf der oder in der oder jeder Filtervorrichtung (9) verbleiben und von einem Verbraucher zusammen mit wenigstens einem Teil des Filters (11) periodisch daraus entfernt werden können, wobei das Wasser nahe dem Filter (11) durch Absorptionsmittel (K) zum Absorbieren von Geruchsstoffen/Geschmacksstoffen geleitet wird, wobei Bakterien von dem Absorptionsmittel (K) aufgenommen werden, wobei der Wasserdruck im wesentlichen von dem Absorptionsmittel unbeeinträchtigt bleibt, **dadurch gekennzeichnet, daß** das Absorptionsmittel (K) und das Filter (11) zusammen mit wenigstens einem Teil des Gehäuses (12) entfernt werden, wodurch Kontakt zwischen den Fasern und dem Verbraucher durch das das Filter (11) und das Absorptionsmittel (K) umgebende Gehäuseteil verhindert wird, wonach das Teil des Gehäuses (12) zusammen mit dem Filter (11), dem Absorptionsmittel (K) und den Fasern entsorgt wird.

## Revendications

1. Appareil de filtration pour filtrer des particules depuis de l'eau en écoulement, comprenant un boîtier (12) pourvu de premiers moyens de connexion (17) pour une conduite d'alimentation (18) et de deuxièmes moyens de connexion (19) pour une conduite d'évacuation (20), un filtre (11) étant enfermé à l'intérieur du boîtier (12), ledit filtre (11) séparant les premiers moyens de connexion (17) depuis les deuxièmes moyens de connexion (19), d'une manière telle que pendant l'utilisation l'eau qui s'écoule depuis la conduite d'alimentation (18) vers la conduite d'évacuation (20) doit passer par le filtre (11), lequel filtre (11) est du type à filtration en profondeur comprenant au moins une couche de filtration pourvue d'un grand nombre de pores relativement petits, dans lequel des premiers moyens de connexion (17) et des moyens d'absorption (K), en particulier du charbon actif, sont inclus à proximité du filtre (11), d'une manière telle que pendant l'utilisation les bactéries qui restent sur le filtre (11) sont absorbées par les moyens d'absorption, de façon que des changements d'odeur et de goût de l'eau sont sensiblement inhibés, dans lequel le filtre (11) est agencé afin de filtrer des fibres et en particulier des fibres d'amiante, au moins depuis l'eau, les pores étant tels que lesdites fibres ne peuvent pas traverser lesdits pores, lesdites fibres inclues dans l'eau étant laissées pendant l'utilisation dans ou sur le filtre (11) sensiblement sur le côté tourné vers les premiers moyens de connexion (17), **caractérisé en ce que** le filtre (11) et les moyens d'absorption (K) au moins sont enfermés dans une unité de filtre (14), laquelle est connectée de manière amovible sur une partie de base (13) du boîtier (12), de sorte que ladite unité de filtre (14), y compris le filtre (11), les moyens d'absorption (K) et les fibres, peuvent être rejetés sans contact entre les fibres sur le filtre (11) et l'opérateur, les fibres demeurant enfermées dans ladite unité de filtre (14).

2. Appareil de filtration selon la revendication 1, **caractérisé en ce que** les moyens d'absorption (K) entourent uniquement partiellement le filtre lorsque l'eau est stationnaire, de préférence sur le côté tourné vers les premiers moyens de connexion (17).

3. Appareil de filtration selon l'une ou l'autre des revendications 1 et 2, **caractérisé en ce que** les moyens d'absorption (K) contiennent des particules en granulés, en particulier des particules de charbon actif qui, pendant l'utilisation, peuvent se déplacer au moins partiellement librement dans le courant d'eau qui passe par le filtre (11) mais qui ne peuvent pas traverser le filtre (11) et sont enfermées dans le boîtier (12).

4. Appareil de filtration selon la revendication 3, **caractérisé en ce que** les particules en granulés ont une taille dans la plage de 0,1 à 15 mm, plus particulièrement dans la plage de 2 à 10 mm, et ont de préférence une taille moyenne d'environ 5 mm, et une densité dans la plage de 50 à 800 kg/m³, plus particulièrement dans la plage de 200 à 500 kg/m³ et de préférence environ 300 kg/m³.

5. Appareil de filtration selon l'une ou l'autre des revendications 3 et 4, **caractérisé en ce que** lorsque l'eau est stationnaire à l'intérieur du boîtier (12), moins de 60 %, plus particulièrement entre 20 et 50 %, et de préférence environ 33 % de la surface du filtre (11) est couverte sur un côté par les moyens d'absorption (K), tandis que lorsque l'eau est en écoulement les particules en granulés sont au moins partiellement forcées en écartement.

6. Appareil de filtration selon l'une quelconque des revendications 1 à 5, **caractérisé en ce que** le filtre (11) et les moyens d'absorption (K) se présentent sous forme analogue à une cartouche et peuvent être aisément placés à l'intérieur du boîtier (12) et enlevés de celui-ci en vue du remplacement par une autre cartouche de filtre (11) avec des moyens d'absorption (K).

7. Appareil de filtration selon la revendication 6, **caractérisé en ce que** le filtre (11) et les moyens d'absorption (K) sont rigidement connectés avec une partie (14) qui est détachable depuis le boîtier (12), et interchangeables de manière intégrale.

8. Appareil de filtration selon l'une ou l'autre des revendications 6 et 7, **caractérisé en ce que** le boîtier (12) comprend au moins deux parties (13, 14) à accoupler, une première partie (13) comprenant les premiers (17) et les deuxièmes moyens de connexion (18), et une deuxième partie (14) comprenant le filtre (11) et les moyens d'absorption (K).

9. Appareil de filtration selon la revendication 8, **caractérisé en ce que** la deuxième partie (14) peut être aisément accouplée à la première partie (13), et désaccouplée de celle-ci, au moyen d'un accouplement à baïonnette, ou d'organes d'accouplement analogues (102, 103).

10. Appareil de filtration selon l'une quelconque des revendications 6 à 9, **caractérisé en ce que** le boîtier (12) comprend des moyens (105) pour fermer au moins les premiers (17) et les deuxièmes moyens de connexion (19) lorsqu'on enlève ou qu'on remplace l'unité de filtre (11, 14, K).

11. Appareil de filtration selon la revendication 10, **caractérisé en ce que** les moyens de fermeture (105) sont agencés de manière à entrer automatiquement en action lorsqu'une partie au moins du boîtier (12) est désaccouplée.

12. Appareil de filtration selon l'une quelconque des revendications 1 à 11, **caractérisé en ce que** le filtre (11) comprend un premier filtre (29) et un filtre final (31).

13. Appareil de filtration selon l'une quelconque des revendications 1 à 12, **caractérisé en ce que** le filtre (11) est agencé de manière à infiltrer depuis de l'eau en écoulement plus de 60 % et de préférence au moins 90 % des fibres ayant une longueur d'au moins 0,5 microns, et plus de 75% et de préférence au moins 99 % des fibres ayant une longueur d'au moins 5 microns.

14. Appareil de filtration selon l'une quelconque des revendications 1 à 13, **caractérisé en ce que** l'appareil de filtration (9) comprend des moyens (10,40) inhibant la croissance des bactéries et/des moyens bactéricides.

15. Unité de filtre destinée à être utilisée dans un appareil de filtration selon l'une quelconque des revendications 1 à 14, **caractérisée en ce que** l'unité de filtre (14) comprend un boîtier (12) qui enferme au moins un filtre (11) du type à filtration en profondeur et des moyens d'absorption (K) qui entourent uniquement partiellement ledit filtre (11) à l'intérieur dudit boîtier (12), lesdits moyens d'absorption (K) étant en contact direct avec ledit filtre (11), l'unité de filtre ayant une paroi filtrante constituée par au moins deux couches (29, 31), l'une des couches (29) qui est tournée pendant l'utilisation vers le côté pour l'alimentation de l'eau à filtrer comportant des pores plus grands (30) pour le passage de l'eau que la couche ou chaque couche (31) prévue sur le côté opposé.

16. Appareil à eau sanitaire, comprenant une conduite de base et un certain nombre de points de puisage, un appareil de filtration (9) selon l'une quelconque des revendications 1 à 14 étant inclus dans l'appareil a eau sanitaire (1) entre la conduite de base (3) et le point de puisage ou au moins un point de puisage (5).

17. Appareil à eau sanitaire selon la revendication 16, **caractérisé en ce que** l'appareil de filtration ou chaque appareil de filtration (9) est agencé au voisinage d'un point de puisage (5).

18. Appareil sanitaire selon l'une ou l'autre des revendications 16 et 17, **caractérisé en ce que** l'appareil de filtration (9) est directement connecté à la conduite de base (3), une série de points de puisage (5A à 5E) étant prévus à une certaine distance depuis l'appareil de filtration (9).

19. Procédé pour filtrer des fibres depuis une alimentation d'eau, un certain nombre d'appareils de filtration selon la revendication 1 étant employés dans le procédé, des fibres étant filtrées dans l'appareil de filtration ou dans chaque appareil de filtration (9) au moyen d'un filtre (11) depuis l'eau qui s'écoule à travers le filtre (11), lesdites fibres filtrées depuis l'eau étant laissées sur ou dans le ou chaque appareil de filtration (9) et pouvant être périodiquement enlevées de celui-ci par un consommateur, ensemble avec au moins une partie du filtre (11), ladite eau étant passée à proximité du filtre (11) à travers des moyens d'absorption (K) afin d'absorber les composantes odorantes/gustatives, les bactéries étant absorbées par les moyens d'absorption (K), et dans lequel la pression de l'eau n'est sensiblement pas affectée par des moyens d'absorption, **caractérisé en ce que** les moyens d'absorption (K) et le filtre (11) sont enlevés conjointement avec au moins une partie du boîtier (12), grâce à quoi un contact entre les fibres et le consommateur est empêché par ladite partie du boîtier qui enferme le filtre (11) et les moyens d'absorption (K), après quoi ladite partie du boîtier (12) est rejetée ensemble avec ledit filtre (11), lesdits moyens d'absorption (K) et lesdites fibres.
